Europäisches Patentamt

European Patent Office

Office européen des brevets

(19)

(11) Veröffentlichungsnummer : **0 471 710 B1**

# (12) EUROPÄISCHE PATENTSCHRIFT

(45) Veröffentlichungstag der Patentschrift :
**16.02.94 Patentblatt 94/07**

(51) Int. Cl.$^5$ : **C08F 220/12,** C08F 218/04,
**C08F 299/02**

(21) Anmeldenummer : **90906971.8**

(22) Anmeldetag : **04.05.90**

(86) Internationale Anmeldenummer :
**PCT/EP90/00720**

(87) Internationale Veröffentlichungsnummer :
**WO 90/13581 15.11.90 Gazette 90/26**

(54) COPOLYMERISATE, DIE POLYALKYLENOXID-BLÖCKE ENTHALTENDE MONOMERE EINPOLYMERISIERT ENTHALTEN, IHRE HERSTELLUNG UND IHRE VERWENDUNG.

(30) Priorität : **09.05.89 DE 3915070**

(43) Veröffentlichungstag der Anmeldung :
**26.02.92 Patentblatt 92/09**

(45) Bekanntmachung des Hinweises auf die
Patenterteilung :
**16.02.94 Patentblatt 94/07**

(84) Benannte Vertragsstaaten :
**DE ES FR GB IT SE**

(56) Entgegenhaltungen :
**EP-A- 0 157 928
DE-A- 3 636 429**

(73) Patentinhaber : **BASF Aktiengesellschaft
Carl-Bosch-Strasse 38
D-67063 Ludwigshafen (DE)**

(72) Erfinder : **BOECKH, Dieter
Trifelsring 63
D-6703 Limburgerhof (DE)**
Erfinder : **SAEELMANN-EGGEBERT,
Hans-Peter
Friedrichstrasse 8
D-6905 Schriesheim (DE)**
Erfinder : **HARTMANN, Heinrich
Weinheimer Strasse 46
D-6703 Limburgerhof (DE)**
Erfinder : **KUD, Alexander
Am Hellbrunn 57
D-6509 Eppelsheim (DE)**
Erfinder : **TRIESELT, Wolfgang
Alwin-Mittasch-Platz 1
D-67000 Ludwigshafen (DE)**

Jouve, 18, rue Saint-Denis, 75001 PARIS

EP 0 471 710 B1

**Beschreibung**

Aus der GB-PS 1 164 361 sind wäßrige Emulsionen von Copolymerisaten aus Vinylestern und Estern von Polyalkylenglykolen mit ethylenisch ungesättigten Carbonsäuren bekannt. Die diesen Estern zugrundeliegenden Polyalkylenoxid-Blöcke enthalten mindestens 3 bis zu 25 Alkylenoxid- Einheiten. Die Copolymerisate werden durch Copolymerisieren der Monomeren in Form einer wäßrigen Emulsion in Gegenwart von 0,4 Gew.%, bezogen auf die Monomeren, an Polymerisationsinitiatoren hergestellt. Die Copolymerisate besitzen ein relatives hohes Molekulargewicht. Sie werden in Form der wäßrigen Latices in Anstrichfarben und Klebstoffen verwendet.

Monomere, die neben mindestens 2 ethylenisch ungesättigten Doppelbindungen im Molekül noch einen Polyalkylenoxidblock enthalten, z.B. die Diester aus Polyethylenglykol, das mehr als 10 Ethylenoxideinheiten enthält, und Acrylsäure oder Methacrylsäure, werden gemäß der Lehren der US-PS 4 351 922 und 4 163 092 als Vernetzer für die Herstellung von wasserabsorbierenden Polymeren verwendet. Die dabei entstehenden Copolymerisate sind jedoch in Wasser und Alkoholen unlöslich.

Aus der US-PS 4 746 456 sind Waschmittel auf der Basis von oberflächenaktiven Mitteln, Buildern, Bleichmitteln und üblichen Zusatzstoffen bekannt, die als vergrauungsinhibierenden Zusatz 0,1 bis 3 Gew.% eines Pfropfpolymerisates enthalten, das durch Pfropfen von Polyalkylenoxiden eines Molekulargewichts von 2000 bis 100 000 mit Vinylacetat im Gewichtsverhältnis 1:0,2 bis 1:10 erhältlich ist.

Aus der DE-OS 37 11 298 ist bekannt, Pfropfpolymerisate, die erhältlich sind durch Pfropfen von mindestens einseitig endgruppenverschlossenen Polyalkylenoxiden eines Molekulargewichts von 300 bis 100 000 auf Basis von Ethylenoxid, Propylenoxid und/oder Butylenoxid mit mindestens einem Vinylester, der sich von einer gesättigten 1 bis 6 C-Atome enthaltenden Monocarbonsäure ableitet und/oder einem Methyl- oder Ethylester der Acrylsäure oder Methacrylsäure im Gewichtsverhältnis von 1:0,2 bis 1:10, als Vergrauungsinhibitoren beim Waschen und Nachbehandeln von Synthesefasern enthaltendem Textilgut zu verwenden.

Gemäß der Lehre der DE-OS 37 11 315 werden Pfropfpolymerisate, die erhältlich sind durch Pfropfen von Polyalkylenoxiden mit mindestens einem Vinylester, der sich von einer gesättigten 3 bis 6 C-Atome enthaltenden Monocarbonsäure ableitet, (Meth)acrylsäuremethyl- und -ethylester sowie gegebenenfalls Mischungen aus einem der genannten Monomeren und bis 95 Gew.-%, Vinylacetat als Vergrauungsinhibitoren beim Waschen und Nachbehandeln von Synthesefasern enthaltendem Textilgut verwendet.

Aus der DE-A-36 36 429 sind polymere Tenside auf Basis von Copolymerisaten aus hydrophoben und hydrophilen Monomeren bekannt. Die Copolymerisate enthalten als hydrophobe Monomere (Meth)Acrylsäurealkylester mit 4 bis 20 C-Atomen in der Alkylgruppe und als hydrophile Monomere Ester aus Acrylsäure oder Methacrylsäure und Polyalkylenoxiden einpolymerisiert. Diese Copolymerisate können zur Erhöhung der Viskosität wäßriger Lösungen oder Polymerdispersionen und als Zusatz zu Waschmittelformulierungen zur Verstärkung der Waschkraft verwendet werden.

Der vorliegenden Erfindung liegt die Aufgabe zugrunde, neue Stoffe zur Verfügung zu stellen, die als wirksamer Zusatz in Waschmitteln einsetzbar sind und dabei gegenüber bekannten polymeren Einsatzstoffen nach Möglichkeit vorteilhaftere Eigenschaften aufweisen.

Die Aufgabe wird erfindungsgemäß gelöst mit Copolymerisaten, die K-Werte von 10 bis 80 haben (bestimmt nach Fikentscher in Dimethylformamid bei 25°C und einer Polymerkonzentration von 2 Gew.-%), und die erhältlich sind durch Copolymerisieren von Monomergemischen aus

(a) 20 bis 50 Gew.-% an wasserlöslichen Monomeren, die aus (A) wasserlöslichen Polyalkylenglykolen oder den wasserlöslichen Alkoxylierungsprodukten mehrwertiger Alkohole eines Molekulargewichts von 458 bis 15 000 und/oder (8) wasserlöslichen alkoxylierten einwertigen $C_1$ bis $C_{25}$- Alkoholen eines Molekulargewichts bis zu 5000 dadurch herstellbar sind, daß man jeweils die Verbindungen (A) oder (B) mit

(1) monoethylenisch ungesättigten $C_3$- bis $C_6$-Carbonsäuren verestert,

(2) Ammoniak zu den entsprechenden endgruppenaminierten Verbindungen (A) oder (8) umsetzt und daraus durch Reaktion mit monoethylenisch ungesättigten $C_3$- bis $C_6$-Carbonsäuren die entsprechenden Carbonsäureamide herstellt,

(3) Acetylen vinyliert oder

(4) monoethylenisch ungesättigten $C_3$- bis $C_{10}$-Alkenylhalogeniden verethert und

(b) 80 bis 50 Gew.-% Vinylacatat, Vinylpropionat, Methylacrylat oder deren Mischungen

bei Temperaturen bis zu 160°C in einem inerten Lösemittel in Gegenwart von 0,1 bis 5 Gew.-%, bezogen auf die Monomeren, an Polymerisationsinitiatoren, wobei die Copolymerisation bei Initiatormengen von weniger als 2 Gew.-% zusätzlich in Gegenwart von Polymerisationsreglern aus der Gruppe der Aldehyde mit 1 bis 4 C-Atomen, Ameisensäure, Ammoniumformiat, Hydroxylammoniumsalzen oder SH-Gruppen enthaltender Verbindungen in Mengen von 0,1 bis 5 Gew.-%, bezogen auf die eingesetzten Monomeren, oder in sekundären Alkoholen als inertes Losemittel und Polymerisationsregler durchgeführt wird.

2

Die Copolymerisate werden als Zusatz zu Waschmitteln in Mengen von 0,1 bis 10 Gew.%, bezogen auf die Waschmittelformulierung verwendet. Sie wirken in Waschmittelformulierungen als Vergrauungsinhibitoren beim Waschen von Textilmaterial aus Polyester oder Polyester-Baumwolle und erhöhen außerdem noch die Primärwaschwirkung.

Die oben beschriebenen isopropanollöslichen Copolymerisate werden durch copolymerisieren von Monomeren der Gruppen (a) und (b) hergestellt. Als Monomere der Gruppe (a) kommen ethylenisch ungesättigte Monomere in Betracht, die im Molekül Polyalkylenoxidblöcke enthalten und mindestens eine monoethylenisch ungesättigte Gruppierung aufweisen, die jeweils über eine Ester-, Amid- oder Etherfunktion an die Polyalkylenoxidblöcke gebunden sind. Die Polyalkylenoxidstruktur der Monomeren der Gruppe (a) leitet sich von wasserlöslichen Polyalkylenglykolen eines Molekulargewichts von 458 bis 15 000, vorzugsweise 722 bis 10 000 ab. Die Polyalkylenglykole werden durch Polymerisieren von Ethylenoxid, Propylenoxid oder Butylenoxiden hergestellt. Hierbei kann es sich um Polyalkylenoxid-Blöcke aus nur einem einzigen Alkylenoxid oder aus Mischungen von 2 oder 3 verschiedenen Alkylenoxiden handeln. Die Alkylenoxide können im Fall von Copolymerisaten statistisch oder als Blöcke in den Polyalkylenoxidstrukturen der Monomeren (a) vorliegen. Vorzugsweise verwendet man als Polyalkylenglykole (A) zur Herstellung der Monomeren der Gruppe (a) Polyethylenglykole eines Molekulargewichts von 1000 bis 6000, insbesondere 1500 bis 4000.

Als Komponente (A) zur Herstellung der Monomeren (a) kann man auch die wasserlöslichen Alkoxylierungsprodukte mehrwertiger Alkohole wie z.B. Glycerin, Sorbit oder Mannit verwenden. Geeignete Alkoxylierungsprodukte besitzen ein Molekulargewicht von 532 bis 15 000, vorzugsweise 796 bis 6 000.

Zur Herstellung der Monomeren der Gruppe (a) kann man auch solche Polyalkylenoxid-Blöcke einsetzen, die durch Alkoxylierung von einwertigen $C_1$- bis $C_{25}$-Alkoholen mit Ethylenoxid, Propylenoxid und/oder Butylenoxid erhältlich sind. Die so erhältlichen Polyalkylenoxidstrukturen (B) weisen Molekulargewichte bis zu 5000 auf. Geeignete Alkohole, die mit den genannten Alkylenoxiden umgesetzt werden, sind beispielsweise Methanol, Ethanol, n-Propanol, iso-Propanol, n-Butanol, iso-Butanol, tert.-Butanol, 2-Ethylhexylalkohole, n-Octanol, n-Decanol, Palmitylalkohol, techn. Kokosfettalkohol, techn. $C_{13}$-$C_{15}$-Oxoalkohol, techn. Ziegleralkohol, z.B. der $C_{12}$-$C_{14}$-Talgfettalkohol und Stearylalkohol. Die Alkoxylierung kann mit einem einzigen Alkylenoxid, vorzugsweise Ethylenoxid oder mit einer Mischung aus Ethylenoxid oder Propylenoxid durchgeführt werden. In diesem Fall erhält man eine statistische Anlagerung von Propylenoxid und Ethylenoxid an die Alkohole. Ebenso ist es auch möglich, Blockpolymerisate von alkoxylierten Alkoholen als Verbindungen (B) zu verwenden.

Zur Herstellung der Monomeren (a) werden die Verbindungen (A) oder (B) verestert. Die Gruppe (1) der Monomeren (a) ist beispielsweise dadurch erhältlich, daß man die Verbindungen (A) oder (B) mit monoethylenisch ungesättigten $C_3$- bis $C_6$-Carbonsäuren verestert. Die Monomeren der Gruppe (A) werden dabei vorzugsweise vollständig verestert, d.h. die endständigen OH-Gruppen der Polyalkylenglykole werden zu 100 % verestert, so daß die entstehenden Monomeren (a) 2 ethylenisch ungesättigte Doppelbindungen pro Molekül enthalten. Die Verbindungen (B) enthalten nur eine endständige OH-Gruppe, die ebenfalls vollständig verestert wird. Diese Monomeren enthalten dann nur eine ethylenisch ungesättigte Doppelbindung.

Die Gruppe (2) der Monomeren (a) ist beispielsweise dadurch erhältlich, daß man die Verbindungen (A) oder (B) zunächst mit Ammoniak zu den entsprechenden Endgruppen aminierten $\alpha,\omega$-Diaminen der Verbindungen (A) oder Monoamine (B) umsetzt. Die Amine werden dann mit monoethylenisch ungesättigten $C_3$- bis $C_6$-Carbonsäuren, -Carbonsäureestern oder -chloriden in die entsprechenden Carbonsäureamide umgewandelt. Die Umsetzung wird dabei so geführt, daß aus den aminierten Verbindungen (A) die entsprechenden Carbonsäurediamide aus den aminierten Verbindungen (B) die Monoamide entstehen. Die Amidbildung mit Carbonsäuren erfolgt in aller Regel bei höheren Temperaturen, z.B. in dem Bereich von 100 bis 200°C unter Abspaltung von Wasser.

Die Gruppe (3) der Monomeren (a) ist beispielsweise dadurch erhältlich, daß man die Verbindungen (A) oder (B) mit Acetylen vinyliert. Bei dieser Reaktion entstehen die Divinylether der Verbindungen (A) und Vinylether der Verbindungen (B), wobei jeweils die endständigen OH-Gruppen der Verbindungen (A) und (B) vinyliert werden.

Die Gruppe (4) der Monomeren (a) ist beispielsweise dadurch erhältlich, daß man monoethylenisch ungesättigte $C_3$- bis $C_{10}$-Alkenylhalogenide, insbesondere die Chloride und Bromide mit den Verbindungen (A) und (B) umsetzt. Im Fall der Reaktion mit den Verbindungen (A) entstehen $\alpha,\omega$-Diallylether, während im Fall der Umsetzung der Verbindungen (B) Monoallylether resultieren.

Geeignete monoethylenisch ungesättigte $C_3$- bis $C_6$-Carbonsäuren sind beispielsweise Acrylsäure, Methacrylsäure, Vinylessigsäure, Allylessigsäure, Propylidenessigsäure, Ethylidenessigsäure, Crotonsäure, $\alpha,\beta$-Ethylacrylsäure, $\alpha,\beta$-Dimethylacrylsäure, Maleinsäure, Itaconsäure und Fumarsäure. Die Veresterung der Verbindungen (A) und (B) kann selbstverständlich auch mit den entsprechenden Anhydriden von monoethylenisch ungesättigten $C_3$- bis $C_6$-Carbonsäuren vorgenommen werden, z.B. mit Acrylsäureanhydrid. Methacrylsäureanhydrid, Maleinsäureanhydrid oder Itaconsäureanhydrid.

Vorzugsweise verwendet man als Monomere der Komoonente (a) die Diacrylate und die Maleinate von Polyethylenglykolen eines Molekulargewichts von 1000 bis 6000, insbesondere 1500 bis 4000. Die Monomeren der Gruppe (a) sind zu 20 bis 50 Gew.% am Aufbau der wasserlöslichen Copolymerisate beteiligt.

Als Monomere der Gruppe (b) werden Vinylacetat, Vinylpropionat und Methylacrylat eingesetzt. Ebenso ist es möglich, Gemische von verschiedenen Monomeren der Gruppe (b) einzusetzen, z.B. Mischungen aus Vinylacetat und Vinylpropionat oder Mischungen aus Vinylacetat und Methylacrylat. Die Copolymerisate enthalten 50 bis 80 Gew.% an Monomeren der Gruppe (b) einpolymerisiert.

Die Copolymerisate aus den Monomeren (a) und (b) können gegebenenfalls durch Einpolymerisieren von weiteren Monomeren modifiziert werden. Zur Modifizierung geeignete Monomere der Gruppe (c) sind beispielsweise Ethylen, Styrol, $\alpha$-Methylstyrol, $C_1$- bis $C_4$-Alkylvinylether, 1,2-Dimethoxyethylen, Vinylencarbonat und Vinylchlorid. Die Monomeren der Gruppe (c) sind in Mengen von 0 bis 20 Gew.% auf Aufbau der Copolymerisate beteiligt.

Die Copolymerisate aus den Monomeren (a) und (b) können gegebenenfalls mit Monomeren der Komponente (d) modifiziert werden. Monomere der Komponente (d) sind Acrylsäure, Methacrylsäure, Crotonsäure, Vinylessigsäure, Ester der genannten Carbonsäuren mit ein- oder mehrwertigen $C_1$- bis $C_8$-Alkoholen, Acrylamid, Methacrylamid, Crotonsäureamid und Vinylessigsäureamid, Maleinsäure, Itaconsäure, Citraconsäure, die Mono- und Diester der Dicarbonsäuren mit ein- oder mehrwertigen $C_1$- bis $C_8$-alkoholen, Imiden der Dicarbonsäuren, Acrylnitril, Methacrylnitril, Dimethylaminoethylacrylat, Diethylaminoethylacrylat, Diethylaminoethylmethcrylat, N-Vinylpyrrolidon, N-Vinylformamid, N-Vinylimidazol, N-Vinylimidazolin, 1-Vinyl-2-methyl-2-imidazolin, 2-Acrylamido-2-methylpropansulfonsäure, Vinylsulfonsäure, Allylsulfonsäure, Vinylphosphonsäure und Allylphosphonsäure. Die Monomeren der Gruppe (d) sind zu 0 bis 10 Gew.% am Aufbau der Copolymerisate beteiligt. Sie können gegebenenfalls zusammen mit den Monomeren der Gruppe (c) oder auch allein zur Mofifizierung der Copolymerisate aus den Monomeren der Gruppen (a) und (b) eingesetzt werden.

Die Copolymerisation erfolgt in einem inerten Lösemittel. Die Konzentration der Monomeren im Lösemittel beträgt 5 bis 80, vorzugsweise 10 bis 50 Gew.%. Als inerte Lösemittel eignen sich beispielsweise Alkohole, z.B. können die Monomeren in dem inerten Verdünnungsmedium nach Art einer Emulsionspolymerisation oder auch Lösungspolymerisation copolymerisiert werden. Die Art der Polymerisation hängt dabei von dem jeweils verwendeten Verdünnungsmedium ab. So wird die Polymerisation in überwiegend wäßrigem Medium beispielsweise nach Art einer Emulsionspolymerisation durchgeführt. Hierbei kann man noch zusätzlich in Gegenwart von Emulgatoren arbeiten. Die Menge an Emulgatoren beträgt dabei 0,05 bis 2,5 Gew.%, bezogen auf die bei der Polymerisation eingesetzten Monomeren. Geeignete Emulgatoren hierfür sind beispielsweise ethoxylierte $C_{10}$-$C_{22}$-Alkohole mit 3 bis 25 mol Ethylenoxid pro mol Alkohol, Fettalkoholsulfate, Fettalkoholpolyglykol- ethersulfate, Blockcopolymere von Ethylenoxid und Propylenoxid sowie Alkoxylierungsprodukte von Alkylphenolen.

Bei der Emulsionspolymerisation kann man beispielsweise das Monomere (b) in Wasser voremulgieren oder in einem Lösemittel gelöst oder auch in unverdünnter Form dem Polymerisationsansatz zufügen. Man erhält dabei weiße Dispersionen, die bei hohem Alkylenoxidanteil im Monomer (a) transparent werden. Durch Zusatz von Lösemitteln, wie Isopropanol oder Propylenglykol zu diesen Dispersionen werden klare Lösungen erhalten.

Die Copolymerisation kann auch nach Art einer Lösungspolymerisation vorgenommen werden. In diesem Fall werden die Monomeren (a) und (b) in einem geeigneten organischen Lösemittel gelöst. Solche Lösemittel sind beispielsweise $C_1$- bis $C_5$-Alkohole, wie Methanol, Ethanol, Isopropanol, n-Propanol, Ethylenglykol, Propylenglykol, Ether, wie Tetrahydrofuran, Dioxan, Ethylenglykoldimethylether, Methyl-tert.butylether sowie aliphatische Ketone, wie Aceton, Methylethylketon, Diethylketon und Cyclohexanon. Soweit diese Lösemittel mit Wasser mischbar sind, lassen sich selbstverständlich auch Mischungen mit Wasser als Reaktionsmedium einsetzen. Eine bevorzugte Ausführungsform besteht in der Polymerisation in Alkohol/Wasser-Mischungen, z.B. Isopropanol/Wasser oder Ethanol/Wasser.

Bei allen oben genannten Polymerisationsverfahren liegen die Polymerisationstemperaturen in dem Bereich von 0 bis 160, vorzugsweise 40 bis 150°C. Sofern die Polymerisationstemperatur oberhalb der Siedetemperatur des Lösemittels unter Normaldruck liegt, führt man die Copolymerisation in 5 druckdichten Apparaturen unter erhöhtem Druck durch.

Als Polymerisationsinitiatoren werden vorzugsweise wasserlösliche Radikalbildende Verbindungen eingesetzt, z.B. Wasserstoffperoxid, Peroxidisulfate und Mischungen aus Wasserstoffperoxid und Peroxidisulfaten. Geeignete Peroxidisulfate sind beispielsweise Lithium-, Natrium-, Kalium- und Ammoniumperoxidisulfat. Bei Mischungen aus Wasserstoffperoxid und Peroxidisulfat kann jedes beliebige Verhältnis eingestellt werden, vorzugsweise verwendet man Wasserstoffperoxid und Peroxidisulfat im Gewichtsverhältnis 3:1 bis 1:3. Mischungen aus Wasserstoffperoxid und Natriumperoxidisulfat werden vorzugsweise im Gewichtsverhältnis von 1:1 angewendet. Die oben genannten wasserlöslichen Polymerisationsinitiatoren können gegebenenfalls auch in Kombination mit Reduktionsmitteln, z.B. Eisen-II-sulfat, Natriumsulfit, Natriumhydrogensulfit, Natriumdithionit, Triethanolamin, Hydroxymethansulfonsäure-Na-Salz und Ascorbinsäure in Form der sogenannten Redox-Initiatoren verwendet werden. Geeignete wasserlösliche organische Peroxide sind beispielsweise Acetylacetonperoxid, Methylethylketonperoxid, tert.-Butylhydroperoxid und Cumolhydroperoxid. Auch die wasserlöslichen organischen Peroxide können mit den oben genannten Reduktionsmitteln eingesetzt werden. Weitere wasserlösliche Polymerisationsinitiatoren sind Azostarter, z.B. 2,2'-Azobis(2-amidinopropan)dihydrochlorid, 2,2'-Azobis(N,N'-dimethylen)isobutyramidin-dihydrochlorid, 2-(Carbamoylazo)isobutyronitril und 4,4'-Azobis-(4-cyanovaleriansäure). Man kann die Polymerisation auch mit wasserunlöslichen Initiatoren, wie Dibenzoylperoxid, Dicyclohexylperoxidicarbonat, tert. -Butylperpivalat, tert.-Butyl-per-2-ethylhexanoat, Dilaurylperoxid oder Azodiisobutyronitril, starten.

Die Initiatoren werden in Mengen von 0,1 bis 5, vorzugsweise 0,3 bis 1,9 Gew.%, bezogen auf die Summe der bei der Polymerisation eingesetzten Monomeren, angewendet. Die Polymerisationsinitiatoren können entweder zusammen mit dem Monomeren oder getrennt davon in Form von Lösungen kontinuierlich oder absatzweise der zu polymerisierenden Mischung zugegeben werden.

Copolymerisate aus den Monomeren (a) und (b) werden erhalten, wenn man die Polymerisation beispielsweise als Emulsionspolymerisation in wäßrigem Medium mit Initiatormengen von mindestens 2 Gew.%, bezogen auf die eingesetzten Monomeren, durchführt. In den Fällen, in denen die Initiatormengen weniger als 2 Gew.%, bezogen auf die eingesetzten Monomeren, betragen, führt man die Polymerisation zusätzlich in Gegenwart von Polymerisationsreglern durch. Als Polymerisationsregler wirken dabei sekundäre Alkohole, z.B. Isopropanol oder Isobutanol, die auch als inertes Lösemittel bei der Herstellung der Copolymerisate aus den Monomeren (a) und (b) verwendet werden können. Die sekundären Alkohole erfüllen somit eine doppelte Funktion, d.h. sie sind inertes Lösemittel und Polymerisationsregler zugleich. Führt man die Polymerisation dagegen in Wasser oder einem anderen nicht regelnden organischen Lösemittel durch, so ist es unerläßlich, zusätzlich noch in Gegenwart von Polymerisationsreglern zu arbeiten. Geeignete Polymerisationsregler sind beispielsweise Aldehyde mit 1 bis 4 Kohlenstoffatomen, wie Formaldehyd, Acetaldehyd, Propionaldehyd, n-Butyraldehyd und Isobutyraldehyd, Ameisensäure, Ammoniumformiat, Hydroxylammoniumsalze, insbesondere Hydroxylammoniumsulfat, SH-Gruppen enthaltende Verbindungen wie Thioglykolsäure, Mercaptoalkohole, wie Mercaptoethanol, Mercaptopropanol, Mercaptobutanole und Mercaptohexanol sowie langkettige Mercaptane, wie Dodecylmercaptan. Vorzugsweise werden stark regelnde Verbindungen verwendet, wie Mercaptoethanol. Die Mengen an Polymerisationsregler betragen 0,1 bis 5, vorzugsweise 0,2 bis 2 Gew.%, bezogen auf die bei der Polymerisation eingesetzten Monomeren. Sofern die Mengen an Polymerisationsinitiatoren mindestens 2 Gew.% betragen, kann auch in Abwesenheit von Polymerisationsreglern copolymerisiert werden. Um ein niedrigeres Molekulargewicht der Copolymerisate einzustellen, kann man jedoch auch noch in solchen Fällen zusätzlich in Gegenwart eines Polymerisationsreglers copolymerisieren.

Bevorzugt ist eine Lösungspolymerisation, bei der als Lösemittel Isopropanol eingesetzt wird, das gleichzeitig auch ein Polymerisationsregler ist. In solchen Fällen führt die Polymerisation in Gegenwart von Initiatormengen, die unterhalb von 2 Gew.%, bezogen auf die Monomeren, betragen, ebenfalls zu isopropanollöslichen Copolymerisaten. Die Polymerisation kann auch mit Hilfe mit Photoinitiatoren unter Bestrahlung mit UV-Licht erfolgen.

Die Copolymerisate haben ein relativ niedriges Molekulargewicht, das mit Hilfe der K-Werte nach Fikentscher charakterisiert wird. Die K-Werte betragen 10 bis 80, vorzugsweise 15 bis 40 (bestimmt in Dimethylformamid bei 25°C und einer Polymerkonzentration von 2 Gew.%). Die Copolymerisate sind in Wasser/Alkohol-Mischungen und reinen Alkoholen löslich. Pro Liter Isopropanol lösen sich z.B. mindestens 50 g des Copolymerisats.

Die oben beschriebenen Copolymerisate werden erfindungsgemäß in Waschmitteln mit reduziertem Phosphatgehalt (darunter soll ein Phosphatgehalt von weniger als 25 Gew.% Natriumtriphosphat verstanden werden) oder in phosphatfreien Waschmitteln verwendet. Zur Vergrauungsinhibierung beim Waschen werden die oben beschriebenen Copolymerisate handelsüblichen Waschmittelformulierungen in Mengen von 0,1 bis 15, vorzugsweise 0,3 bis 5 Gew.%, bezogen auf die Waschmittelformulierung, zugesetzt. Die Copolymerisate können dabei in Form eines Granulats, einer Paste, einer hochviskosen Masse, als Dispersion oder als Lösung in einem Lösemittel der Waschmittelformulierung zugegeben werden. Die Copolymerisate können auch an der Oberfläche von Stellmitteln, z.B. Natriumsulfat oder Gerüststoffen (Zeolithen oder Bentoniten) sowie anderen festen Hilfsstoffen der Waschmittelformulierung adsorbiert werden.

Waschmittelformulierungen sind pulverförmig oder flüssig. Die pulverförmigen Waschmittel können regional und gemäß dem speziellen Anwendungszweck verschieden zusammengesetzt sein.

Universalhaushaltswaschmittel für Trommelwaschmaschinen, wie sie in Europa weit verbreitet sind, enthalten gewöhnlich 5 bis 10 Gew.% Aniontenside; 1 bis 5 Gew.% nichtionische Tenside; 1 bis 5 Gew.% Schaumregulatoren, wie Silikonöle oder Seifen; 0 bis 40 Gew.% Enthärtungsmittel, wie Soda oder Pentanatriumtriphosphat, das durch die erfindungsgemäßen Verbindungen teilweise oder ganz ersetzt werden kann; 0 bis 30 Gew.% Ionenaustauscher, wie Zeolith A; 2 bis 7 Gew.% Natriumsilikate als Korrosionsinhibitoren; 10 bis 30 Gew.% Bleichmittel, wie Natriumperborat oder Natriumpercarbonat; 0 bis 5 Gew.% Bleichaktivatoren, wie Tetraacetylethylendiamin, Pentaacetylglucose, Hexaacetylsorbit oder Acyloxibenzolsulfonat; Stabilisatoren, wie Magnesiumsilikat oder Ethylendiamintetraacetat; Vergrauungsinhibitoren, wie Carboximethylcellulose, Methyl- und Hydroxialkylcellulosen, mit Vinylacetat gepfropfte Polyglykole, oligomere und polymere Terephthalsäure/Ethylenglykol/Polyethylenglykol-Ester; Enzyme; optische Aufheller; Duftstoffe; Weichmacher; Farbstoffe und Stellmittel.

Im Gegensatz hierzu sind die Heavy Duty Detergents, die in den USA, Japan und diesen Ländern benachbarten Staaten in den Bottichwaschmaschinen verwendet werden, meist frei von Bleichmitteln, ihr Anteil an Aniontensiden ist dafür zwei bis dreimal so hoch, sie enthalten mehr Waschalkalien, wie Soda und Natriumsilikate (in der Regel bis zu 25 Gew.%) und natürlich fehlen ihnen auch die Bleichaktivatoren und Bleichstabilisatoren. Die Gehaltsangaben für Tenside und andere Inhaltsstoffe können sich noch beträchtlich erhöhen, wenn es sich um sogenannte Waschmittelkonzentrate handelt, die stellmittelfrei oder stellmittelarm in den Handel kommen. Fein- und Buntwaschmittel, Wollwaschmittel und Mittel für die manuelle Wäsche enthalten ebenfalls meist kein Bleichmittel und geringe alkalische Bestandteile bei entsprechend erhöhtem Tensidanteil.

Waschmittel für den gewerblichen Sektor sind auf die speziellen Verhältnisse des industriellen Waschens zugeschnitten (weiches Wasser, kontinuierliches Waschen), die es gestatten, schwerpunktmäßig auf die Art des Waschguts und der Verschmutzung einzugehen. Es werden daher Kombinationen verwendet, in denen ein Bestandteil vorherrscht oder andere ganz fehlen, die bei Bedarf getrennt zudosiert werden. Deshalb variieren die Bestandteile Tenside, Builder (Gerüststoffe), Alkalien und Bleichmittel dieser Waschmittel in weiten Grenzen.

Geeignete anionische Tenside für die vorgenannten Pulverwaschmittel sind beispielsweise Natriumalkylbenzolsulfonate, Fettalkoholsulfate und Fettalkoholpolyglykolethersulfate. Einzelne Verbindungen dieser Art sind beispielsweise $C_8$- bis $C_{12}$-Alkylbenzolsulfonate, $C_{12}$- bis $C_{16}$-Alkansulfonate, $C_{12}$- bis $C_{16}$-Alkylsulfate, $C_{12}$- bis $C_{16}$-Alkylsulfosuccinate und sulfatierte ethoxylierte $C_{12}$- bis $C_{16}$-Alkanole. Als anionische Tenside eignen sich auperdem sulfatierte Fettsäurealkanolamine, Fettsäuremonoglyceride oder Umsetzungsprodukte von 1 bis 4 Mol Ethylenoxid mit primären oder sekundären Fettalkolen oder Alkylphenolen. Weitere geeignete anionische Tenside sind Fettsäureester bzw. Fettsäureamide von Hydroxy- oder Aminocarbonsäuren bzw. -sulfonsäuren, wie beispielsweise die Fettsäuresarkoside, -glykolate, -lactate, -tauride oder -isothionate. Die anionischen Tenside können in Form der Natrium-, Kalium- und Ammoniumsalze sowie als lösliche Salze organischer Basen, wie Mono-, Di- oder Triethanolamin oder andere substituierter Amine vorliegen. Zu den anionischen Tensiden gehören auch die üblichen Seifen, d.h. die Alkalisalze der natürlichen Fettsäuren.

Als nichtionische Tenside (Nonionics) sind z.B. Anlagerungsprodukte von 3 bis 40, vorzugsweise 4 bis 20 Mol Ethylenoxid an 1 Mol Fettalkohol, Alkylphenol, Fettsäure, Fettamin, Fettsäureamid oder Alkansulfonamid verwendbar. Besonders wichtig sind die Anlagerungsprodukte von 5 bis 16 Mol Ethylenoxid an Kokos- oder Talgfettalkohole, an Oleylalkohol oder an synthetische Alkohole mit 8 bis 18, vorzugsweise 12 bis 18 C-Atomen, sowie an Mono- oder Dialkylphenole mit 6 bis 14 C-Atomen in den Alkylresten. Neben diesen wasserlöslichen Nonionics sind aber auch nicht bzw. nicht vollständig wasserlösliche Polyglykolether mit 1 bis 4 Ethylenglykoletherresten im Molekül von Interesse, insbesondere wenn sie zusammen mit wasserlöslichen nichtionischen oder anionischen Tensiden eingesetzt werden.

Weiterhin sind als nichtionische Tenside die wasserlöslichen, 20 bis 250 Ethylenglykolethergruppen und 10 bis 100 Propylenglykolethergruppen enthaltenden Anlagerungsprodukte von Ethylenoxid an Polypropylenglykolether, Alkylendiaminopolypropylenglykol und Alkylpolypropylenglykole mit 1 bis 10 C-Atomen in der Alkylkette brauchbar, in denen die Polypropylenglykoletherkette als hydrophober Rest fungiert.

Auch nichtionische Tenside vom Typ der Aminoxide oder Sulfoxide sind verwendbar.

Das Schaumvermögen der Tenside läßt sich durch Kombination geeigneter Tensidtypen steigern oder verringern. Eine Verringerung läßt sich ebenfalls durch Zusätze von nichttensidartigen organischen Substanzen erreichen.

Ein weiterer wichtiger Bestandteil in Waschmittelformulierungen sind Inkrustierungsinhibitoren. Bei diesen Stoffen handelt es sich beispielsweise um Homopolymerisate der Acrylsäure, Methacrylsäure und Maleinsäure oder um Copolymerisate, z.B. Copolymerisate aus Maleinsäure und Acrylsäure, Copolymerisate aus Maleinsäure und Methacrylsäure bzw. aus Copolymerisaten von a) Acrylsäure und/oder Methacrylsäure mit b) Acrylsäureestern, Methacrylsäureestern, Vinylestern, Allylestern, Itaconsäureestern, Itaconsäure, Methylenmalonsäure, Methylenmalonsäureester, Crotonsäure und Cotonsäureester. Außerdem kommen Copolymere aus Olefinen und $C_1$- bis $C_4$-Alkylvinylethern in Betracht. Das Molekulargewicht der Homo- und Copolymerisate beträgt 1 000 bis 100 000. Die Inkrustationsinhibitoren werden in einer Menge von 0,5 bis 10 Gew.% in Waschmitteln verwendet, wobei sie in nicht neutralisierter Form, als Alkali- oder Ammoniumsalz sowie in partiell neutralisierter Form, z.B. Neutralisation von 40 bis 60 % der Carboxylgruppen, eingesetzt werden.

Weitere Mischungsbestandteile von Waschmitteln können auch monomere, oligomere und polymere Phosphonate, Ethersulfonate auf der Basis von ungesättigten Fettalkoholen, z.B. Oleylalkoholethoxylatbutylether und deren Alkalisalze sein. Diese Stoffe können z.B. mit Hilfe der Formel $RO(CH_2CH_2O)_n-C_4H_8-SO_3Na$, in der n = 5 bis 40 und R = Oleyl ist, charakterisiert werden.

Die oben beschriebenen Copolymerisate können auch als Zusatz zu Flüssigwaschmitteln verwendet werden. Die Flüssigwaschmittel enthalten als Abmischkomponente flüssige oder auch feste Tenside, die in der Waschmittelformulierung löslich oder zumindest dispergierbar sind. Als Tenside kommen hierfür die Produkte in Betracht, die auch in pulverförmigen Waschmitteln eingesetzt werden sowie flüssige Polyalkylenoxide bzw. polyalkoxylierte Verbindungen. Falls die Copolymerisate mit den übrigen Bestandteilen des Flüssigwaschmittels nicht direkt mischbar sind, kann man mit Hilfe geringer Menge an Lösungsvermittlern, z.B. Wasser oder eines mit Wasser mischbaren organischen Lösemittel, z.B. Isopropanol, Methanol, Ethanol, Glykol, Diethylenglykol oder Triethylenglykol oder entsprechende Propylenglykole, homogene Mischungen herstellen. Die Tensidmenge in Flüssigwaschmitteln beträgt 4 bis 50 Gew.%, bezogen auf die gesamte Formulierung, da auch bei den Flüssigwaschmitteln je nach den regionalen Marktgegebenheiten oder dem Anwendungszweck die Anteile der Bestandteile in weiten Grenzen variieren.

Die Flüssigwaschmittel können Wasser in Mengen von 10 bis 60, vorzugsweise 20 bis 50 Gew.% enthalten. Sie können aber auch wasserfrei sein.

Wasserfreie Flüssigwaschmittel können auch Peroxoverbindungen zum Bleichen in suspendierter oder dispergierter Form enthalten. Als Peroxoverbindungen seien z.B. genannt: Natriumperborat, Peroxocarbonsäuren und Polymere mit teilweise peroxohaltigen Gruppen. Auperdem können die Flüssigwaschmittel gegebenenfalls Hydrotrope enthalten. Hierunter werden Verbindungen verstanden wie 1,2-Propandiol, Cumolsulfonat und Toluolsulfonat. Falls derartige Verbindungen zur Modifizierung der Flüssigwaschmittel eingesetzt werden, beträgt ihre Menge, bezogen auf das Gesamtgewicht des Flüssigwaschmittels, 2 bis 5 Gew.%. In vielen Fällen hat sich zur Modifizierung von pulverförmigen und flüssigen Waschmitteln auch ein Zusatz von Komplexbildnern als vorteilhaft erwiesen. Komplexbildner sind beispielsweise Ethylendiamintetraessigsäure, Nitrilotriacetat und Isoserindiessigsäure sowie Phosphonate, wie Aminotrismethylenphosphonsäure, Hydroxyethandiphosphonsäure, Ethylendiamintetraethylenphosphonsäure und deren Salze. Die Komplexbildner werden in Mengen von 0 bis 10 Gew.%, bezogen auf die Waschmittel, eingesetzt. Die Waschmittel können auperdem Zitrate, Di- oder Triethanolamin, Trübungsmittel, optische Aufheller, Enzyme, Parfümöle und Farbstoffe enthalten. Diese Stoffe sind, falls sie zur Modifzierung der Flüssigwaschmittel verwendet werden, zusammen in Mengen bis zu 5 Gew.% anwesend. Die Waschmittel sind vorzugsweise phosphatfrei. Sie können jedoch auch Phosphate enthalten, z.B. Pentanatriumtriphosphat und/oder Tetrakaliumpyrophosphat. Falls Phosphate eingesetzt werden, beträgt der Anteil der Phosphate an der Gesamtformulierung des Waschmittels bis 25 Gew.%.

Die Copolymerisate eignen sich außerdem als Zusatz beim Nachbehandeln von synthetische Fasern enthaltendem Textilgut, z.B. zur Erzeugung von soil release-Effekten. Sie werden zu diesem Zweck dem letzten Spülbad eines Waschmaschinenzyklus zugesetzt, wobei der Zusatz entweder zusammen mit einem an dieser Stelle üblicherweise angewendeten Wäscheweichspüler erfolgen kann oder - falls ein Weichspüler nicht erwünscht ist - allein anstelle des Weichspülers. Die Einsatzmengen betragen 0,01 bis 0,3 g/l Waschflotte. Die Verwendung der Copolymerisate im letzten Spülbad eines Waschmaschinenzyklus hat den Vorteil, daß die Wäsche beim nächsten Waschzyklus weit weniger von abgelösten Schmutzteilchen, die in der Waschflotte vorhanden sind, angeschmutzt wird als ohne den Zusatz des Vergrauungsinhibitors bei der vorausgegangen Wäsche.

Die erfindungsgemäßen Copolymerisate können auch mit anderen bekannten Waschmitteladditiven (wie z.B. Inkrustationsinhibitoren, Vergrauungsinhibitoren, Claydispergatoren und Stoffen, die die Primärwaschwirkung verstärken, Farbübertragungsinhibitoren, Bleichaktivatoren) in Pulver- und Flüssigwaschmitteln (phosphathaltig und phosphatfrei) synergistische Effekte hervorrufen, bei denen nicht nur die Vergrauungsinhibierung, sondern auch die Wirkung des anderen Waschmitteladditivs verstärkt werden kann.

Die in den Beispielen angegebenen Teile sind Gewichsteile, die Angaben in Prozent beziehen sich auf das Gewicht der Stoffe. Die K-Werte der Copolymerisate wurden nach H. Fikentscher, Cellulosechemie, Band 13, 58 bis 64 und 71-74 (1932) in Dimethylformamid bei einer Temperatur von 25°C und einer Polymerkonzentration von 2 Gew.% gemessen; dabei bedeutet K = $k \cdot 10^3$.

Herstellung der Copolymerisate

Allgemeine Herstellungsvorschrift I

In einem mit Stickstoff gespülten 2 l Glasreaktor, der mit 4 Zulaufgefäßen und Rückflußkühler versehen ist, werden 766 g Wasser bei 75°C vorgelegt. Gleichbeginnend werden als getrennte Zuläufe innerhalb von 2 Stunden die in Tabelle 1 angegebenen Mengen Vinylacetat und eine 51,3 %ige Lösung des Acrylats eines Polyethylenglykols vom Molekulargewicht 1500 (Monomer (a)) in Wasser zudosiert, wobei durch die Monomeren vorher 10 Minuten lang ein Stickstoffstrom durchgeleitet wird. Die in Tabelle 1 angegebenen Mengen Mercaptoethanol sowie 2,2'-Azobis(2-amidinopropan)dihydrochlorid werden als Lösungen in Wasser innerhalb 2 bzw. 2,5 Stunden zugetropft. Nach einer weiteren Stunde bei 80°C wird abgekühlt und zur Kontrolle über ein Filter mit 100 μ filtriert. Im Filter wird in der Regel kein Rückstand gefunden. Zur Bestimmung der K-Werte werden die Dispersionen bis zur Gewichtskonstanz eingedampft und das Produkt 2 %ig in Dimethylformamid gelöst.

Allgemeine Herstellungsvorschrift II

In einem mit Stickstoff gespülten 2 l Glasreaktor, der mit 3 Zulaufgefäßen und Rückflußkühler versehen ist, werden 766 g Wasser bei 75°C vorgelegt. In einem der Zulaufgefäße werden die in der Tabelle angegebenen Mengen Vinylester, 51,3 %ige Lösung des Acrylats eines Polyethylenglykols vom Molekulargewicht 1500 (Monomer (a)) in Wasser und 2 Gew.% (bezogen auf die Monomeren) eines Anlagerungsproduktes von 25 mol Ethylenoxid an 1 mol p-Isooctylphenol als Emulgator durch intensives Rühren emulgiert. Durch die Mischung wird bis zum Ende des Zulaufs Stickstoff geleitet. Die Monomermischung wird ebenso wie eine Lösung von der in der Tabelle angegebenen Menge Mercaptoethanol in 47 g Wasser innerhalb 2 Stunden zudosiert. Gleichbeginnend wird innerhalb von 2,5 Stunden eine Lösung von 2,2'-Azobis(2-amidinopropan)dihydrochlorid oder Wasserstoffperoxid zugetropft. Bei Verwendung von Wasserstoffperoxid als Initiator wird eine äquivalente Menge Hydroxymethansulfonsäure-Na-Salz 20 % in Wasser parallel zugegeben. Nach einer weiteren Stunde bei 80°C wird abgekühlt und zur Kontrolle über ein Filter filtriert. Im Filter wird in der Regel kein Rückstand gefunden. Zur Bestimmung der K-Werte werden die Lösungen bis zur Gewichtskonstanz eingedampft und das Produkt 2 %ig in Dimethylformamid gelöst.

Allgemeine Herstellungsvorschrift III

In einem mit Stickstoff gespülten 2 l Glasreaktor, der mit 3 Zulaufgefäßen und Rückflußkühler versehen ist, werden 516 g Isopropanol und 250 g Wasser bei 70°C vorgelegt. In einem der Zulaufgefäße werden die in der Tabelle angegebenen Mengen Methylacrylat, Polyethylenglykoldiacrylat (Molekulargewicht des Polyethylenglykols $\overline{M}_n$ = 1500) und 100 g Isopropanol gemischt und durch die Mischung bis zum Ende des Zulaufs ein schwacher Stickstoffstrom geleitet. Die Monomermischung wird ebenso wie eine Lösung von der in der Tabelle angegebenen Menge Mercaptoethanol in 95 g Wasser innerhalb 4 Stunden zudosiert. Gleichbeginnend wird innerhalb von 4,5 Stunden eine Lösung von 2,2'-Azobis(2-amidinopropan)dihydrochlorid in Wasser zugetropft. Nach einer weiteren Stunde bei 70°C wird abgekühlt und zur Kontrolle über ein Filter filtiert. Im Filter wird in der Regel kein Rückstand gefunden. Zur Bestimmung der K-Werte werden die Lösungen bis zur Gewichtskonstanz eingedampft und das Produkt 2 %ig in Dimethylformamid gelöst.

Allgemeine Herstellungsvorschrift IV

In einem mit Stickstoff gespülten 2 l Glasreaktor, der mit 3 Zulaufgefäßen und Rückflußkühler versehen ist, werden 925 g Wasser bei 80°C vorgelegt. In einem der Zulaufgefäße wird eine 50 %ige Lösung des Dimaleinats von Polyethylenglykolen der in Tabelle 3 angegebenen Molekulargewichte in Wasser bereitet und die Lösung mit NaOH auf pH 7,0 gestellt. Diese Lösung sowie das in einem separaten Zulaufgefäß befindliche Monomer b) werden 30 min mit Stickstoff durchströmt und anschließend in 4 Stunden zudosiert. Lösungen von 2,1 g 2,2'-Azobis(2-amidinopropan)dihydrochlorid sowie von der in Tabelle 3 angegebenen Menge Mercaptoethanol in jeweils 100 ml Wasser werden in 4,5 bzw. 4 Stunden zudosiert. Nach einer weiteren Stunde bei 80°C wird abgekühlt und zur Kontrolle über ein Filter filtriert. Im Filter wird in der Regel kein Rückstand gefunden. Zur Bestimmung der K-Werte werden die Lösungen bis zur Gewichtskonstanz eingedampft und die Produkte 2 %ig in Dimethylformamid gelöst.

Tabelle 1: Copolymere nach Vorschriften I und II

| Nr. | Monomer (a) 51,3 %ig [g] | Monomer (b) [g] | | Initiator [Gew.%] | | ME[4) [Gew.%] | Vorschrift | K-Wert des Copolymeri-sats |
|---|---|---|---|---|---|---|---|---|
| 1 | 187,1 | VAc[2) | 240,0 | V50[1) | 0,4 | 0,6 | I | 34,1 |
| 2 | 150,4 | VAc | 270,0 | V50 | 0,4 | 0,5 | I | 34,8 |
| 3 | 253,2 | VAc | 229,1 | V50 | 0,4 | 1,0 | I | 29,9 |
| 4 | 211,0 | VAc | 190,9 | V50 | 0,4 | 1,5 | I | 25,4 |
| 5 | 211,0 | VAc | 190,9 | V50 | 0,4 | 2,0 | I | 22,8 |
| 6 | 232,1 | VAc | 180,0 | V50 | 0,4 | 1,5 | I | 24,7 |
| 7 | 185,7 | VAc | 240,0 | $H_2O_2$ | 2,0 | − | II | 21,5 |
| 8 | 154,7 | VAc | 200,0 | $H_2O_2$ | 4,0 | − | II | 16,9 |
| 9 | 193,4 | VPr[3) | 200,0 | V50 | 0,4 | 0,5 | II | 28,8 |
| 10 | 164,4 | VPr | 212,5 | V50 | 0,4 | 0,5 | II | 29,2 |

Tabelle 2: Copolymere nach Vorschrift III

| Nr. | Monomer (a) 51,7 %ig [g] | Methylacrylat [g] | Initiator [Gew.%] | | Zulaufzeit [h] | ME[4) [Gew.%] | K-Wert des Copolymeri-sats |
|---|---|---|---|---|---|---|---|
| 11 | 232,1 | 180,0 | V50 | 1,0 | 4,0 | 2,0 | 20,0 |
| 12 | 116,1 | 240,0 | V50 | 0,4 | 2,0 | 2,0 | 30,2 |
| 13 | 193,4 | 200,0 | V50 | 1,0 | 3,0 | 2,0 | 16,1 |

Tabelle 3a: Copolymere nach Vorschrift IV

| Nr. | PEG-Dimaleinat[5) $M_n$ (PEG) | [g][6) | VAc [g] | Initiator [Gew.%] | ME [Gew.%] | K-Wert des Copolymerisats |
|---|---|---|---|---|---|---|
| 14 | 1500 | 89,9 | 214,3 | 0,4 | 1,0 | 36,6 |
| 15 | 1500 | 104,9 | 200,0 | 1,0 | 1,0 | 30,4 |
| 16 | 4000 | 89,9 | 214,3 | 1,0 | 1,0 | 31,6 |
| 17 | 4000 | 104,9 | 200,0 | 1,0 | 1,0 | 27,1 |

Tabelle 3b: Copolymer für Vergleichsbeispiel

| Nr. | $M_n$ (PEG) | Verhältnis PEG/VAc | K-Wert |
|---|---|---|---|
| 18 | 4000 | 1 : 2 | 23,9 |

[1] V50    2,2'-Azobis(2-amidinopropan)dihydrochlorid
[2] VAc    Vinylacetat
[3] VPr    Vinylpropionat
[4] ME     Mercaptoethanol
[5] PEG    Polyethylenglykol
[6] $M_n$    Zahlenmittel des Molekulargewichts

Anwendungstechnische Prüfung

Die vergrauungsinhibierende Wirkung der oben angegebenen Copolymerisate wurde folgendermaßen geprüft: Polyesterprüfgewebe wurden zusammen mit einem Standard-Schmutzgewebe einer Reihe von 3 Wäschen unterzogen. Das Schmutzgewebe wird nach jeder Wäsche erneuert, wobei das Testgewebe nach jeder Wäsche stärker anschmutzt. Der Weißgrad des Testgewebes nach der 3. Wäsche dient zur Beurteilung des Anschmutzungsgrades. Die Werte werden durch mehrfache Wiederholung und Mittelwertbildung gesichert. Die photometrische Messung der Remission in % wurde im vorliegenden Fall am Elrepho 2000 (Datacolor) bei der Wellenlänge 460 nm gemessen (Barium-Primärweipstandard nach DIN 5033).

Prüfbedingungen:

| | |
|---|---|
| Prüfgerät: | Launder-O-meter |
| Wasserhärte: | 3,5 mmol/Molverhältnis Ca:Mg = 4:1 |
| Flottenmenge: | 250 ml |
| Flottenverhältnis: | 1:16,6 |
| Versuchstemperatur: | 60°C |
| Versuchsdauer: | 30 Minuten (mit Aufheizzeit) |
| Waschmittelkonzentration: | 8 g/l |

In den Beispielen wurde der Vergrauungsinhibitor (Testsubstanz) jeweils in einer Menge von 0,3 %, bezogen auf das Testwaschmittel zugesetzt. Die Prüfgefäße enthielten jeweils 5 g Polyestertestgewebe und 10 g Schmutzgewebe. Als Schmutzgewebe diente Baumwollschmutzgewebe der Wäschereiforschungsanstalt Krefeld, und zwar WFK 10 D).

Die verwendeten Testwaschmittel hatten folgende Zusammensetzung:

|                                      | Waschmittel |            |            |
|--------------------------------------|-------------|------------|------------|
| Zusammensetzung                      | Nr. 1 [%]   | Nr. 2 [%]  | Nr. 3 [%]  |
| $C_{12}$-Alkylbenzolsulfonat         | 6,25        | 6,25       | 5,0        |
| Talgfettalkohol mit 7 Ethylen-oxid umgesetzt | 4,70 | 4,7       | 25,0       |
| Kokosfettsäure                       | -           | -          | 10,0       |
| Seife                                | 2,80        | 2,8        | -          |
| Natriumtriphosphat                   | -           | 9,25       | -          |
| Na-diphosphat                        | -           | 0,70       | -          |
| Na-orthophosphat                     | -           | 0,05       | -          |
| Zeolith A                            | 25,0        | -          | -          |
| Natriumcarbonat                      | 12,0        | -          | -          |
| Mg-Silikat                           | 1,0         | 1,0        | -          |
| Na-disilikat                         | 6,0         | 6,0        | -          |
| Na-perborat-Tetrahydrat              | 20,0        | 20,0       | -          |
| Carboxymethylcellulose, Na-Salz      | 0,6         | 0,6        | -          |
| Testsubstanz                         | 0,3         | 0,3        | 0,3        |
| Na-Sulfat                            | Rest auf 100 % | Rest auf 100 % | -     |
| Wasser                               | -           | -          | Rest auf 100 % |
| Triethanolamin                       | -           | -          | 6          |
| Polypropylenoxid $\overline{M}_n$ = 600 g/mol | -  | -          | 2          |
| Isopropanol                          | -           | -          | 8          |
| Kaliumhydroxid                       | -           | -          | 1,25       |

Tabelle 4: Primärwaschwirkung

| Copolymer Nr. | Remission an | |
|---------------|--------------------|----------|
|               | WFK-Gewebe [%] 10 D | EMPA 104 |
| **Waschmittel 1** | | |
| 4             | -                  | 43,3     |
| 5             | -                  | 44,2     |
| 6             | 68,3               | 41,8     |
| 10            | 69,8               |          |
| **Waschmittel 2** | | |
| 3             | 65,8               | -        |
| 4             | 66,5               | -        |
| 13            | 67,0               | -        |

Tabelle 5: Vergleichsbeispiele zur Prüfung der Primärwaschwirkung

| Vergleichs-beispiel | Zusatz Polymer | Remission [%] an | |
|---|---|---|---|
| | | WFK 10 D | EMPA 104 |
| | | Waschmittel 1 | |
| 1 | 18 | 66,8 | 37,1 |
| | | Waschmittel 2 | |
| 2 | 18 | 65,7 | 50,3 |

Tabelle 6: Vergrauungsinhibierung Schmutzgewebe = WFK 10 D

| Copolymer Nr. | Remission [%] an PES-Gewebe |
|---|---|
| | Waschmittel 1 |
| 13 | 80,5 |
| 1 | 79,1 |
| 2 | 79,7 |
| | Waschmittel 2 |
| 3 | 75,8 |
| 4 | 74,7 |
| 6 | 73,1 |
| 13 | 79,8 |
| 16 | 72,7 |
| 15 | 72,1 |
| | Waschmittel 3 |
| 13 | 75,2 |
| 3 | 74,5 |

**Tabelle 7: Vergleichsbeispiele zur Vergrauungsinhibierung**

**Schmutzgewebe = WFK 10 D**

| Vergleichs-beispiel Nr. | Copolymer | Remission [%] an PES-Gewebe |
|---|---|---|
| | | Waschmittel 1 |
| 3 | 18 | 75,6 |
| | | Waschmittel 2 |
| 4 | 18 | 71,3 |
| | | Waschmittel 3 |
| 5 | 18 | 73,7 |

**Patentansprüche**

1.  Copolymerisate, die K-Werte von 10 bis 80 haben (bestimmt nach Fikentscher in Dimethylformamid bei 25°C und einer Polymerkonzentration von 2 Gew.%), und die erhältlich sind durch Copolymerisieren von Monomergemischen aus

    (a) 20 bis 50 Gew.% an wasserlöslichen Monomeren, die aus (A) wasserlöslichen Polyalkylenglykolen oder den wasserlöslichen Alkoxylierungsprodukten mehrwertiger Alkohole eines Molekulargewichts von 458 bis 15 000 und/oder (B) wasserlöslichen alkoxylierten einwertigen $C_1$- bis $C_{25}$-Alkoholen eines Molekulargewichts bis zu 5000 dadurch herstellbar sind, daß man jeweils die verbindungen (A) oder (B) mit

    (1) monoethylenisch ungesättigten $C_3$- bis $C_6$-Carbonsäuren verestert,

    (2) Ammoniak zu den entsprechenden endgruppenaminierten Verbindungen (A) oder (B) umsetzt und daraus durch Reaktion mit monoethylenisch ungesättigten $C_3$- bis $C_6$-Carbonsäuren die entsprechenden Carbonsäureamide herstellt,

    (3) Acetylen vinyliert oder

    (4) monoethylenisch ungesättigten $C_3$- bis $C_{10}$-Alkenylhalogeniden verethert und

    (b) 80 bis 50 Gew.-% Vinylacetat, Vinylpropionat, Methylacrylat oder deren Mischungen

    bei Temperaturen bis zu 160°C in einem inerten Lösemittel in Gegenwart von 0,1 bis 5 Gew.%, bezogen auf die Monomeren, an Polymerisationsinitiatoren, wobei die Copolymerisation bei Initiatormengen von weniger als 2 Gew.% zusätzlich in Gegenwart von Polymerisationsreglern aus der Gruppe der Aldehyde mit 1 bis 4 C-Atomen, Ameisensäure, Ammoniumformiat, Hydroxylammoniumsalzen oder SH-Gruppen enthaltender Verbindungen in Mengen von 0,1 bis 5 Gew.-%, bezogen auf die eingesetzten Monomeren, oder in sekundären Alkoholen als inertes Lösemittel und Polymerisationsregler durchgeführt wird.

2.  Verfahren zur Herstellung von Copolymerisaten nach Anspruch 1, dadurch gekennzeichnet, daß man

    (a) 20 bis 50 Gew.-% an wasserlöslichen Monomeren, die aus (A) wasserlöslichen Polyalkylenglykolen oder den wasserlöslichen Alkoxylierungsprodukten mehrwertiger Akohole eines Molekulargewichts von 458 bis 15 000 oder (8) wasserlöslichen alkoxylierten einwertigen $C_1$- bis $C_{25}$-Alkoholen eines Molekulargewichts bis zu 5000 dadurch herstellbar sind, daß man jeweils die Verbindungen (A) oder (B) mit

    (1) monoethylenisch ungesättigten $C_3$- bis $C_6$-Carbonsäuren verestert,

    (2) Ammoniak zu den entsprechenden endgruppenaminierten Verbindungen (A) oder (B) umsetzt und daraus durch Reaktion mit monoethylenisch ungesättigten $C_3$- bis $C_6$-Carbonsäuren die entsprechenden Carbonsäureamide herstellt,

    (3) Acetylen vinyliert oder

    (4) monoethylenisch ungesättigten $C_3$- bis $C_{10}$-Alkenylhalogeniden verethert und

13

(b) 80 bis 50 Gew.-% Vinylacetat, Vinylpropionat, Methylacrylat oder deren Mischungen

bei Temperaturen bis zu 160°C in einem inerten Lösemittel in Gegenwart von 0,1 bis 5 Gew.-%, bezogen auf die Monomeren, an Polymerisationsinitiatoren copolymerisiert, wobei die Copolymerisation bei Initiatormengen von weniger als 2 Gew.-% zusätzlich in Gegenwart von Polymerisationsreglern aus der Gruppe der Aldehyde mit 1 bis 4 C-Atomen, Ameisensäure, Ammoniumformiat, Hydroxylammoniumsalzen oder SH-Gruppen enthaltender Verbindungen in Mengen von 0,1 bis 5 Gew.-%, bezogen auf die eingesetzten Monomeren, oder in sekundären Alkoholen als inertes Lösemittel und Polymerisationsregler durchgeführt wird.

3. Verwendung der Copolymerisate nach Anspruch 1 als Zusatz zu Waschmitteln in Mengen von 0,1 bis 10 Gew.-%, bezogen auf die Waschmittelformulierung.

## Claims

1. A copolymer having a K value of from 10 to 80 (determined by the method of Fikentscher in dimethylformamide at 25°C with a polymer concentration of 2% by weight) and obtainable by copolymerizing a monomer mixture of

(a) from 20 to 50% by weight of a water-soluble monomer preparable from (A) a water-soluble polyalkylene glycol or water-soluble alkoxylation product of a polyhydric alcohol of a molecular weight of from 458 to 15,000 or (B) a water-soluble alkoxylated monohydric $C_1$-$C_{25}$-alcohol having a molecular weight of up to 5,000 by subjecting compound (A) or (B) to

(1) an esterification with a monoethylenically unsaturated $C_3$-$C_6$-carboxylic acid,

(2) a reaction with ammonia to form the corresponding end group aminated compound (A) or (B) which is reacted with a monoethylenically unsaturated $C_3$-$C_6$-carboxylic acid to prepare the corresponding carboxamide,

(3) a vinylation with acetylene, or

(4) an etherification with a monoethylenically unsaturated $C_3$ -$C_{10}$-alkenyl halide, and

(b) from 80 to 50% by weight of vinyl acetate, vinyl propionate, methyl acrylate or a mixture thereof

at up to 160°C in an inert solvent in the presence of from 0.1 to 5% by weight, based on the monomers, of a polymerization initiator, and, if the amount of initiator is less than 2% by weight, additionally in the presence of a polymerization regulator from the group of the aldehydes having from 1 to 4 carbon atoms, formic acid, ammmonium formate, hydroxylammonium salts or SH-containing compounds in amounts of from 0.1 to 5% by weight, based on the monomers used, or in secondary alcohols as inert solvent and polymerization regulator.

2. A process for preparing a copolymer as claimed in claim 1, which comprises copolymerizing

(a) from 20 to 50% by weight of a water-soluble monomer preparable from (A) a water-soluble polyalkylene glycol or water-soluble alkoxylation product of a polyhydric alcohol of a molecular weight of from 458 to 15,000 or (B) a water-soluble alkoxylated monohydric $C_1$-$C_{25}$-alcohol having a molecular weight of up to 5,000 by subjecting compound (A) or (B) to

(1) an esterification with a monoethylenically unsaturated $C_3$-$C_6$-carboxylic acid,

(2) a reaction with ammonia to form the corresponding end group aminated compound (A) or (B) which is reacted with a monoethylenically unsaturated $C_3$-$C_6$-carboxylic acid to prepare the corresponding carboxamide,

(3) a vinylation with acetylene, or

(4) an etherification with a monoethylenically unsaturated $C_3$-$C_{10}$-alkenyl halide, and

(b) from 80 to 50% by weight of vinyl acetate, vinyl propionate, methyl acrylate or a mixture thereof

at up to 160°C in an inert solvent in the presence of from 0.1 to 5% by weight, based on the monomers, of a polymerization initiator, and, if the amount of initiator is less than 2% by weight, additionally in the presence of a polymerization regulator from the group of the aldehydes having from 1 to 4 carbon atoms, formic acid, ammmonium formate, hydroxylammonium salts or SH-containing compounds in amounts of from 0.1 to 5% by weight, based on the monomers used, or in secondary alcohols as inert solvent and polymerization regulator.

3. The use of a copolymer as claimed in claim 1 as a detergent additive in an amount of from 0.1 to 10% by weight, based on the detergent formulation.

**Revendications**

1. Copolymères qui ont une valeur K de 10 à 80 (déterminée selon Fikentscher dans le diméthylformamide à 25°C et avec une concentration en polymère de 2% en poids) et que l'on peut obtenir par copolymérisation de mélanges de monomères constitués de

(a) 20 à 50% en poids de monomères hydrosolubles que l'on peut préparer à partir (A) de polyalkylèneglycols hydrosolubles ou des produits d'alcoxylation hydrosolubles de polyalcools de poids moléculaire de 458 à 15 000 et/ou (B) de monoalcools en $C_1$-$C_{25}$ alcoxylés hydrosolubles de poids moléculaire allant jusqu'à 5 000, les composés (A) ou (B) étant selon le cas

(1) estérifiés avec des acides carboxyliques en $C_3$-$C_6$ à mono-insaturation éthylénique,
(2) traités par l'ammoniac pour former les composés (A) ou (B) à groupement amine terminal correspondants et transformés ensuite en les amides correspondants par réaction avec des acides carboxyliques en $C_3$-$C_6$ à mono-insaturation éthylénique,
(3) transformés en composés vinyliques avec de l'acétylène ou
(4) éthérifiés avec des halogénures d'alcényle en $C_3$-$C_{10}$ à mono-insaturation éthylénique et

(b) 80 à 50% en poids d'acétate de vinyle, de propionate de vinyle, d'acrylate de méthyle ou de leurs mélanges,

à des températures allant jusqu'à 160°C dans un solvant inerte en présence de 0,1 à 5% en poids, par rapport aux monomères, d'amorceurs de polymérisation, la copolymérisation étant effectuée avec des quantités d'amorceurs de moins de 2% en poids, en outre en présence de régulateurs de polymérisation du groupe des aldéhydes ayant de 1 à 4 atomes de carbone, de l'acide formique, du formiate d'ammonium, des sels d'hydroxylammonium ou de composés contenant des groupements SH en quantités comprises entre 0,1 à 5% en poids, par rapport aux monomères mis en réaction, ou dans des alcools secondaires comme solvants inertes et régulateurs de polymérisation.

2. Procédé de préparation de copolymères selon la revendication 1, caractérisé en ce que

on copolymérise à des températures allant jusqu'à 160°C dans un solvant inerte en présence de 0,1 à 5% en poids, par rapport aux monomères, en présence d'amorceurs de polymérisation, la copolymérisation étant effectuée avec des quantités d'amorceurs de moins de 2% en poids et également en présence de régulateurs de polymérisation du groupe des aldéhydes ayant de 1 à 4 atomes de carbone, de l'acide formique, du formiate d'ammonium, des sels d'hydroxylammonium ou des composés contenant des groupements SH à raison de 0,1 à 5% en poids par rapport aux monomères mis en réaction, ou dans des alcools secondaires comme solvants et régulateurs de polymérisation,

(a) de 20 à 50% en poids de monomères hydrosolubles que l'on a préparé à partir (A) de polyalkylèneglycols hydrosolubles ou de produits d'alcoxylation hydrosolubles de polyalcools ayant un poids moléculaire de 458 à 15 000 ou (B) de monoalcools en $C_1$-$C_{25}$ alcoxylés hydrosolubles de poids moléculaire allant jusqu'à 5 000, les composés (A) ou (B) étant selon le cas

(1) éthérifiés avec des acides carboxyliques en $C_3$-$C_6$ à mono-insaturation éthylénique,
(2) traités par l'ammoniac pour former les composés (A) ou (B) à groupement amine terminal correspondants et transformés ensuite en amides correspondants par réaction avec des acides carboxyliques en $C_3$-$C_6$ à mono-insaturation éthylénique,
(3) transformés en dérivés vinyliques avec de l'acétylène ou
(4) éthérifiés avec des halogénures d'alcényle en $C_3$-$C_{10}$ à mono-insaturation éthylénique, et

(b) de 80 à 50% en poids d'acétate de vinyle, de propionate de vinyle, d'acrylate de méthyle ou de leurs mélanges.

3. Utilisation des copolymères selon la revendication 1 comme additifs à des produits de lavage à raison de 0,1 à 10% en poids par rapport à la formulation de produits de lavage.